# EUROPEAN PATENT SPECIFICATION

(11) **EP 4 389 803 B1**
(45) Date of publication and mention of the grant of the patent: **18.06.2025**
(21) Application number: 23217631.3
(22) Date of filing: 18.12.2023
(51) Int. Cl.: C08J 3/20, C08J 5/04, C08K 3/32, C08K 7/02, C08L 1/02, C08L 67/02, C08L 67/04, C08L 97/02, C08K 5/5399, C08K 5/5313

(54) **MOLDING MATERIAL**
FORMMASSE
MATIERE DE MOULAGE

(30) Priority: 20.12.2022 JP 2022202981
(43) Date of publication of application: 26.06.2024
(73) Proprietor: Seiko Epson Corporation, Tokyo 160-8801 (JP)
(72) Inventor: FUJITA, Tomohiro, Suwa-shi, 392-8502 (JP); YOKOKAWA, Shinobu, Suwa-shi, 392-8502 (JP); NAKAJIMA, Chieko, Suwa-shi, 392-8502 (JP); SAKAGUCHI, Kiyoaki, Suwa-shi, 392-8502 (JP)
(74) Representative: Lewis Silkin LLP

(56) References cited:
- EP-A1- 4 098 691
- JP-A- 2006 152 122
- JP-B2- 5 369 766
- US-A1- 2013 012 631

## Description

### BACKGROUND

### 1. Technical Field

The present disclosure relates to a molding material.

### 2. Related Art

Heretofore, molding materials each containing cellulose fibers, a resin, and the like have been known. For example, JP-A-2020-33541 has disclosed a cellulose composite resin containing cellulose fibers, a main resin, such as an olefin-based resin, and a rubber-containing polymer. The rubber-containing polymer described above is formed from, for example, an aliphatic hydrocarbon or an aromatic hydrocarbon each having only a specific functional group.

However, in the cellulose composite resin disclosed in JP-A-2020-33541, when an amount of the cellulose fibers is increased, and in addition, when a flame retardant is added, a problem in that the strength of a molded product is difficult to increase may arise in some cases. In particular, as the cellulose fibers, fibers recovered from waste paper or the like may be used. In addition, in recent years, in view of reduction in environmental load, to increase the amount of cellulose fibers in a molding material and to decrease usage of synthetic resins have been considered. In addition, when flame retardancy is improved by addition of the flame retardant, an impact strength and a bending strength may be liable to be decreased, and as a result, a molded product may also be liable to be deformed or cracked in some cases. That is, a molding material capable of improving the flame retardancy and the strength of a molded product has been demanded. demanded.

In addition, prior art document JP-5-369766 B2 has disclosed a flame-retardant thermoplastic polyester resin composition and a molded article having excellent in physical properties, such as tensile strength and elongation and weld physical properties, such as weld strength and weld elongation.

Moreover, prior art document EP 4 098 691 A1 has disclosed a thermoplastic polyester resin compositions comprising phosphorous-based flame retardants, an molded articles obtained by said compositions excellent in flame retardancy, tracking resistance, mechanical properties.

### SUMMARY

According to an aspect of the present disclosure, there is provided a molding material as set out in the appended set of claims.

### BRIEF DESCRIPTION OF THE DRAWINGS

FIG. 1 is a table showing compositions and evaluation results of molding materials according to Examples.
FIG. 2 is a table showing compositions and evaluation results of molding materials according to Comparative Examples.

### DESCRIPTION OF EMBODIMENTS

### 1. MOLDING MATERIAL

A molding material according to this embodiment contains a polyester-based elastomer, a highly polar polyester, cellulose fibers, and a flame retardant. To the molding material described above, a known forming method, such as injection molding or press working, may be applied. Molded products manufactured from the molding material are used as substitutes for styrene and the like and are preferably used for various types of containers; sheets; housings of office machines, such as printers; and housings of home appliances and the like. Hereinafter, various types of raw materials contained in the molding material will be described.

### 1.1. POLYESTER-BASED ELASTOMER

The polyester-based elastomer has a thermoplastic property, and when a molded product is manufactured from the molding material, the polyester-based elastomer is melted to bind the cellulose fibers to each other. In addition, the polyester-based elastomer is responsible for the physical properties of the molded product together with the cellulose fibers. In particular, by the polyester-based elastomer, the toughness of the molded product is increased, and the impact strength is improved. Furthermore, in future, the polyester-based elastomer has a possibility to be produced and used as bioplastics and is expected to promote the reduction in environmental load.

The polyester-based elastomer includes, as raw material monomers, an alkyldicarboxylic acid having an alkylene group with 2 to 8 carbon atoms or a phthalic acid, and an alkylenediol having an alkylene group with 2 to 8 carbon atoms. The polyester-based elastomer is formed by copolymerization of the above two types of raw material monomers using a known synthetic method.

As the alkyldicarboxylic acid described above, for example, a linear saturated aliphatic dicarboxylic acid, such as succinic acid, glutaric acid, adipic acid, pimelic acid, suberic acid, azelaic acid, or sebacic acid, may be mentioned. Those alkyldicarboxylic acids each may have a substituent group in its molecular structure. For the synthesis of the polyester-based elastomer, at least one of those mentioned above is used.

The phthalic acid may have a substituent group in its molecular structure.

As the alkylenediol described above, for example, a divalent alcohol, such as 1,2-ethanediol, 1,3-propanediol, 1,4-butanediol, 1,5-pentanediol, 1,6-hexanediol, 1,7-heptanediol, or 1,8-octanediol may be mentioned. For the synthesis of the polyester-based elastomer, at least one of those mentioned above is used. The two types of raw material monomers described above are relatively easily available and can be used for industrial application or commercial application.

The polyester-based elastomer may also contain, besides the raw material monomers described above, another raw material monomer. As the another raw material monomer, for example, styrene, butadiene, acrylic acid, an acrylate ester, methacrylic acid, a methacrylate ester, acetonitrile, isobutylene, isoprene, or ethylene may be mentioned, and at least one of those mentioned above may be used.

When the another raw material monomer is incorporated in the polyester-based elastomer, with respect to the total number of moles of the raw material monomers, the total number of moles of the another raw material monomer is preferably set to 1% to less than 50%. Accordingly, the strength of the molded product can be further improved.

As the polyester-based elastomer, a commercial product may also be used. As the commercial product, for example, ES-A60NX, E-D27N, E-D42N, or ES Series (trade name, manufactured by ARONKASEI Co., Ltd.) may be mentioned. As the polyester-based elastomer, at least one of those mentioned above may be used.

In addition, in the molding material or in a molded body formed therefrom, the presence or absence of the polyester-based elastomer may be determined by the following physical property analysis and component analysis.

First, in the physical property analysis, the presence or absence of a component having a composite elastic modulus of 100 MPa or less is confirmed. When the component described above is contained, an elastomer component is determined to be contained. In particular, for example, using a scanning probe microscope NX20 provided by Park Systems Japan, the cross-section of the molding material or the molded body is measured in a contact mode. Accordingly, the presence or absence of the component having a composite elastic modulus of 100 MPa or less can be confirmed. In addition, the presence or absence of the elastomer component may also be confirmed using a known nanointender.

Next, by a qualitative analysis using both a pyrolysis gas chromatographic mass analysis (GC-MS) method and a Fourier transform infrared spectroscopic (FT-IR) method, whether the elastomer component is a polyester-based elastomer or not is determined. The pyrolysis GC-MS method is an analytical method to identity various types of fragments generated by pyrolysis of a test sample. The FT-IR method is an analytical method to identify the molecular structure of a test sample from an infrared absorption spectrum thereof. By those analytical methods described above, the molecular structure of the test sample can be identified.

For the pyrolysis GC-MS method, for example, a multi-shot pyrolyzer EGA/PY-3030D (manufactured by Frontier Laboratories Ltd.) and a GC/MS 5975 (manufactured by Agilent Technologies) attached thereto are used. For the FT-IR method, for example, a Nicolet (registered trademark) 380 Continuµm (registered trademark) (manufactured by Thermo Fisher Scientific) is used.

### 1.2. HIGHLY POLAR POLYESTER

The highly polar polyester improves compatibility between the cellulose fibers and the polyester-based elastomer. Accordingly, wettability of the polyester-based elastomer to the cellulose fibers is increased, and the bending strength of the molded product is mainly improved.

The highly polar polyester has a molecular structure having a relatively high polarity, and in a repeated structure derived from a raw material monomer, the number of oxygen atoms is one or more with respect to two carbon atoms. In particular, the highly polar polyester includes, as the raw material monomer, lactic acid, hydroxybutyric acid, oxysuccinic acid, citric acid, malonic acid, succinic acid, serine, threonine, acrylic acid, methyl acrylate, or vinyl acetate. Those raw material monomers mentioned above are relatively easily available and can be used for industrial application or commercial application.

In particular, the highly polar polyester comprising poly(lactic acid) and may include a poly(hydroxybutyric acid). In view of reduction in environmental load, the highly polar polyester preferably includes poly(hydroxybutyric acid) having biodegradability. In addition, the highly polar polyester may be a copolymer, such as a poly(ethylene-succinic acid) or P3HBH (3-hydroxy(butyrate-co-hexanoate)). As the highly polar polyester, a commercial product may also be used.

In addition, in the molding material, a content of the polyester-based elastomer with respect to a content of the highly polar polyester comprising poly(lactic acid) is 25 to 400 percent by mass.
Accordingly, in the molded product, the impact strength and the bending strength can be improved with a good balance.

### 1.3. CELLULOSE FIBERS

The cellulose fibers function as a filler material in the molded product and contribute to an increase in volume of the molding material and to an improvement in physical properties, such as the strength, of the molded product.

The cellulose fibers are plant-derived and are a relatively abundant natural material. Hence, when the cellulose fibers are used, compared to the case in which synthetic fibers are used, the reduction in environmental load is promoted. The cellulose fibers also have advantages in terms of preparation of raw materials and cost thereof. In addition, among various types of fibers, the cellulose fibers have a high theoretical strength and contribute to the improvement in strength of the molded product. As the cellulose fibers, besides the use of a virgin pulp, for example, waste paper and/or waste cloth may be recycled.

Although being mainly formed from cellulose, the cellulose fibers may contain components other than the cellulose. As the components other than the cellulose, for example, a hemicellulose and/or a lignin may be mentioned. In addition, as the cellulose fibers, cellulose fibers processed by a treatment, such as bleaching, may also be used.

In order to improve the appearance of the surface of the molded product, the cellulose fibers have an average fiber length of preferably less than 500 µm and more preferably less than 50 µm. The average fiber length of the cellulose fibers can be obtained by a method in accordance with ISO 16065-2:2007.

In the molding material, a total content of the polyester-based elastomer and the highly polar polyester is equal to or lower than a content of the cellulose fibers. Accordingly, in the molded product, the function of the cellulose fibers as the filler material can be more significantly obtained.

### 1.4. FLAME RETARDANT

The flame retardant has a phosphazene skeleton or a phosphate skeleton in its molecular structure. The phosphazene skeleton indicates a cyclic or a chain molecular structure in which phosphorus atoms and nitrogen atoms are alternately bonded to each other. That is, the flame retardant having a phosphazene skeleton in its molecular structure is a phosphazene derivative. Although the phosphazene derivative is not particularly limited, for example, there may be mentioned hexachlorocyclotriphosphazene, hexabromocyclotriphosphazene, trichlorotriphenoxycyclotriphosphazene, hexaphenoxycyclotriphosphazene, trichlorotrimethoxycyclotriphosphazene, or at least one of the phosphazene derivatives mentioned above in which the ring structure is opened into a linear molecular structure.

As the flame retardant having a phosphazene skeleton, a commercial product may also be used. As the commercial product, in particular, a phosphazene-based flame retardant, such as Rabitle (registered trademark) FP-110 or FP-100 (trade name, manufactured by Mitsui Fine Chemicals, Inc.), may be mentioned.

The phosphate skeleton has the structure in which at least one of hydrogen atoms of three hydroxy groups of a phosphoric acid is replaced by an organic group. The flame retardant having a phosphate skeleton is a phosphate derivative. Although the phosphate derivative is not particularly limited, for example, there may be mentioned triphenyl phosphate, tris(isopropylphenyl) phosphate, diphenyl monohexyl phosphate, diphenyl ammonium phosphate, diphenyl aluminium phosphate, or a compound, such as a polymer or a bis-compound, having a structure in which the same phosphate units are repeatedly present or a structure in which the same phosphate units are cross-linked with a diol compound interposed therebetween.

As the flame retardant having a phosphate skeleton, a commercial product may also be used. As the commercial product, in particular, for example, there may be mentioned a phosphate-based flame retardant, such as Exolit (registered trademark) OP1230, OP1240, OP1312, OP1400, or OP930 (manufactured by Clariant), or ADK STAB (registered trademark) FP-600, FP-900L, FP-2100JC, FP-2500S, FP-2600U, or PFR (manufactured by ADEKA Corporation).

The flame retardant having a phosphazene skeleton or a phosphate skeleton in its molecular structure has flame retardancy by addition of a relatively small amount thereof. Hence, in the molded product, the influence of the flame retardant on the strength can be suppressed.

The flame retardant having a phosphazene skeleton or a phosphate skeleton in its molecular structure shows a preferable dispersibility in the molding material or the molded product compared to that of another flame retardant. Accordingly, the flame retardant described above is not likely to be localized in the form of aggregates in the molded product. Hence, a decrease in physical properties of the molded product caused by localization of the flame retardant can be suppressed. In addition, the another flame retardant in this case indicates a flame retardant, such as an antimony compound, a metal hydroxide, a nitrogen compound, or a boron compound.

The dispersion state of the flame retardant can be observed, for example, by an element mapping analysis using a scanning electron microscope. The dispersion state of the flame retardant is preferably such that in the cross-section of the molding material or the molded product, the number of aggregates of the flame retardant per one cm² is one or less.

In the molding material, a content of the flame retardant with respect to a total content of the polyester-based elastomer, the highly polar polyester, and the cellulose fibers is set to 1 to 10 percent by mass. Accordingly, in the molded product, while the influence on the strength is suppressed, the flame retardancy can be improved.

### 1.5. OTHER ADDITIVES

The molding material may contain other additives besides the flame retardant. As the other additives, for example, a colorant, an insect repellent, an antifungal agent, an antioxidant, an UV absorber, an aggregation inhibitor, and/or a mold-release agent may be mentioned. In addition, the molding material may also contain, besides the polyester-based elastomer and the highly polar polyester described above, at least one of other resins. As the other additives, commercial products may also be used.

### 2. METHOD FOR MANUFACTURING MOLDING MATERIAL

A method for manufacturing a molding material will be described. For the method for manufacturing a molding material, a known method may be used. In particular, for example, the following method may be used.

First, the raw materials described above were kneaded by a single screw kneader or a twin screw kneader into strands. Subsequently, the strands are processed by a pelletizer to form a molding material in the form of pellets.

In addition, as the method for manufacturing a molding material, the following method may also be used. First, waste paper and/or a pulp material is coarsely pulverized by a shredder machine into cellulose fibers. Next, the cellulose fibers, a polyester-based elastomer, a highly polar polyester, a flame retardant, are weighed and then kneaded with each other. Subsequently, the raw materials thus kneaded together were deposited in air to form a sheet-shaped deposit. Since containing a large amount of air and having a low density, the deposit described above is pressed by a calendar machine to remove air, so that the density of the deposit is increased. Next, after being heated in a non-contact manner using a heating furnace, the deposit is heat-pressed by a heat press machine.

In the heating furnace and the heat press machine, the heating is performed at a temperature higher by approximately 20°C than the melting point of each of the polyester-based elastomer and the highly polar polyester. Accordingly, a sheet is formed so that the raw materials are dispersed while suppressed from being localized.

Next, the sheet is cut by a shredder machine into pieces each having a desired shape, so that a molding material in the form of pellets is formed. Although the desired shape of the molding material is not particularly limited, a cube having a length of 2 to 5 mm may be formed. The molding material is manufactured by one of the methods described above. In addition, the method for manufacturing a molding material is not limited thereto.

According to this embodiment, the following effect can be obtained. The flame retardancy and the strength of the molded product can be obtained. The flame retardancy can be improved by addition of a relatively small amount of a flame retardant having a phosphazene skeleton or a phosphate skeleton. In addition, since the polyester-based elastomer has a linear alkyl group, the impact strength can be mainly improved. Since the highly polar polyester enhances the compatibility between the polyester-based elastomer and the cellulose fibers, the bending strength can be mainly improved. Accordingly, when the polyester-based elastomer and the highly polar polyester are used in combination, the balance between the impact strength and the bending strength can be improved. Hence, a molding material to improve the flame retardancy and the strength of a molded product can be provided.

### 3. EXAMPLES AND COMPARATIVE EXAMPLES

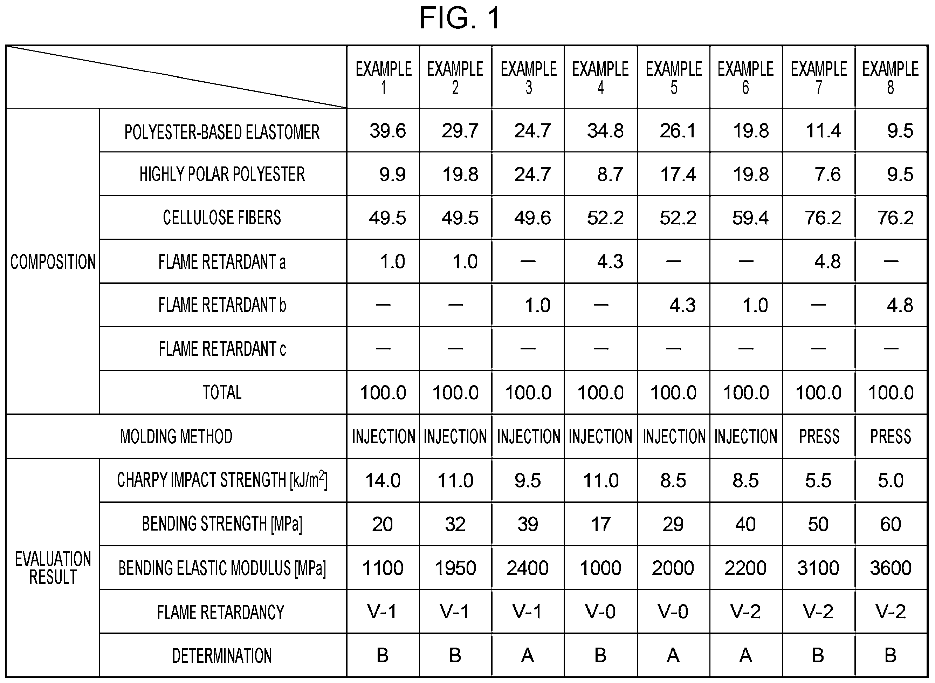

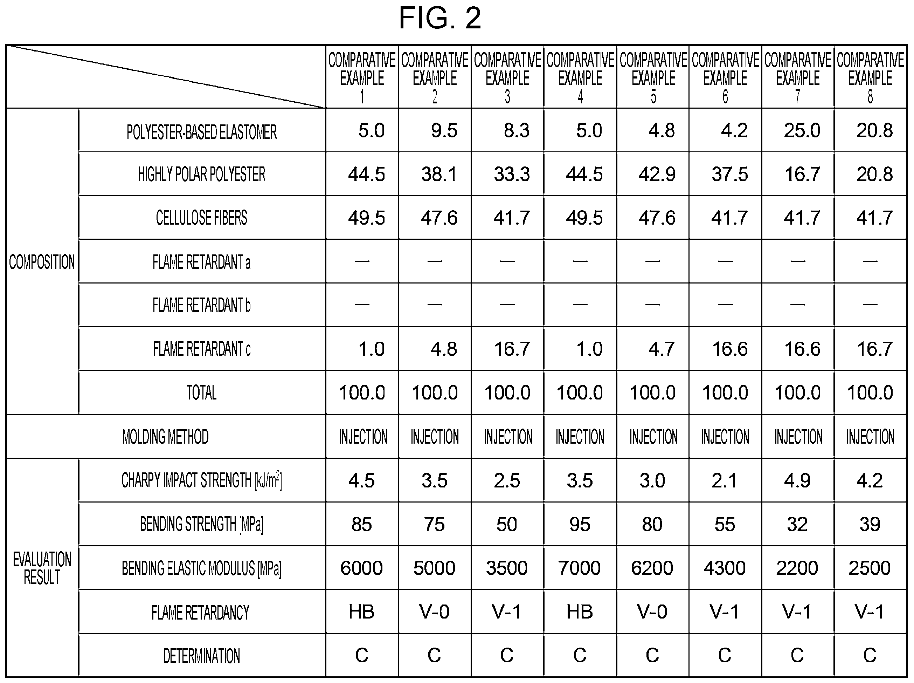

Hereinafter, by comparison between Examples and Comparative Examples, the effect of the present disclosure will be described in more detail. Compositions of raw materials of molding materials of Examples 1 to 8 and evaluation results of the molded products thereof are shown in FIG. 1. Compositions of raw materials of molding materials of Comparative Examples 1 to 8 and evaluation results of the molded products thereof are shown in FIG. 2.

In the following description, Examples 1 to 8 are also collectively simply called "Examples" in some cases, and Comparative Examples 1 to 8 are also collectively simply called "Comparative Examples" in some cases. The present disclosure is not limited at all to the following Examples. In addition, in the columns of the compositions of FIGs. 1 and 2, the unit of numerical value is percent by mass, and the column in which no numerical value is shown but "-" is shown indicates that no compound is contained. The details of the raw materials shown in FIGs. 1 and 2 are as described below.
▪ polyester-based elastomer: trade name ES-A60Nx, manufactured by ARONKASEI Co., Ltd.
▪ highly polar polyester: poly(lactic acid), trade name Terramac (registered trademark) TE-2000, manufactured by Unitika Ltd.
▪ cellulose fibers: trade name Guaiba BEKP, manufactured by CMPC
▪ flame retardant a: phosphazene-based flame retardant, trade name Rabitle (registered trademark) FP-110, manufactured by Mitsui Fine Chemicals, Inc.
▪ flame retardant b: phosphate-based flame retardant, trade name Exolit (registered trademark) OP1230, manufactured by Clariant
▪ flame retardant c: inorganic-based flame retardant (zinc borate), trade name BestBoron (registered trademark), manufactured by SOUFA

In accordance with the compositions shown in Figs. 1 and 2, the molding materials of Examples and Comparative Examples were manufactured. In particular, for example, the polyester-based elastomers, the highly polar polyesters, the cellulose fibers, and the flame retardants were weighed.

Next, the materials described above were charged in a twin-screw kneader KZW15TW-45MG (manufactured by Technovel Corporation) and were then kneaded thereby. As the kneading conditions, a maximum heating temperature was set to 180°C, and an extrusion amount was set to 1 kg/hr. Next, after the materials described above were formed into strands, a molding material in the form of pellets was obtained using a pelletizer.

The molding materials of Examples and Comparative Examples were formed into evaluation test pieces by injection molding or press working. In particular, in the injection molding and the press working, a heating temperature of the molding material was set to 200°C. As an injection molding machine, a THX40-5V machine (manufactured by Nissei Plastic Industrial Co., Ltd.) was used, and as a press working machine, an oil hydraulic press PHKS-40ABS (manufactured by Towa Seiki Co., Ltd.) was used. The shapes of the respective evaluation test pieces will be described later.

In Example 1, the contents of the polyester-based elastomer, the highly polar polyester, the cellulose fibers, and the flame retardant a were set to 39.6 percent by mass, 9.9 percent by mass, 49.5 percent by mass, and 1.0 percent by mass, respectively, and the test pieces were formed by injection molding.

In Example 2, compared to Example 1, the content of the polyester-based elastomer was decreased to 29.7 percent by mass, and the content of the highly polar polyester was increased to 19.8 percent by mass.

In Example 3, the contents of the polyester-based elastomer, the highly polar polyester, the cellulose fibers, and the flame retardant b were set to 24.7 percent by mass, 24.7 percent by mass, 49.6 percent by mass, and 1.0 percent by mass, respectively, and the test pieces were formed by injection molding.

In Example 4, compared to Example 1, the content of the polyester-based elastomer was decreased to 34.8 percent by mass, the content of the highly polar polyester was decreased to 8.7 percent by mass, the content of the cellulose fibers was increased to 52.2 percent by mass, and the content of the flame retardant a was increased to 4.3 percent by mass.

In Example 5, compared to Example 3, the content of the polyester-based elastomer was increased to 26.1 percent by mass, the content of the highly polar polyester was decreased to 17.4 percent by mass, the content of the cellulose fibers was increased to 52.2 percent by mass, and the content of the flame retardant b was increased to 4.3 percent by mass.

In Example 6, compared to Example 3, the content of the polyester-based elastomer was decreased to 19.8 percent by mass, the content of the highly polar polyester was decreased to 19.8 percent by mass, and the content of the cellulose fibers was increased to 59.4 percent by mass.

In Example 7, the contents of the polyester-based elastomer, the highly polar polyester, the cellulose fibers, and the flame retardant a were set to 11.4 percent by mass, 7.6 percent by mass, 76.2 percent by mass, and 4.8 percent by mass, respectively, and the test pieces were formed by press working.

In Example 8, the contents of the polyester-based elastomer, the highly polar polyester, the cellulose fibers, and the flame retardant b were set to 9.5 percent by mass, 9.5 percent by mass, 76.2 percent by mass, and 4.8 percent by mass, respectively, and the test pieces were formed by press working.

In Comparative Example 1, the contents of the polyester-based elastomer, the highly polar polyester, the cellulose fibers, and the flame retardant c were set to 5.0 percent by mass, 44.5 percent by mass, 49.5 percent by mass, and 1.0 percent by mass, respectively, and the test pieces were formed by injection molding.

In Comparative Example 2, compared to Comparative Example 1, the content of the polyester-based elastomer was increased to 9.5 percent by mass, the content of the highly polar polyester was decreased to 38.1 percent by mass, the content of the cellulose fibers was decreased to 47.6 percent by mass, and the content of the flame retardant c was increased to 4.8 percent by mass.

In Comparative Example 3, compared to Comparative Example 1, the content of the polyester-based elastomer was increased to 8.3 percent by mass, the content of the highly polar polyester was decreased to 33.3 percent by mass, the content of the cellulose fibers was decreased to 41.7 percent by mass, and the content of the flame retardant c was increased to 16.7 percent by mass.

In Comparative Example 4, the contents of the polyester-based elastomer, the highly polar polyester, the cellulose fibers, and the flame retardant c were set to 5.0 percent by mass, 44.5 percent by mass, 49.5 percent by mass, and 1.0 percent by mass, respectively, and the test pieces were formed by injection molding.

In Comparative Example 5, compared to Comparative Example 1, the content of the polyester-based elastomer was decreased to 4.8 percent by mass, the content of the highly polar polyester was decreased to 42.9 percent by mass, the content of the cellulose fibers was decreased to 47.6 percent by mass, and the content of the flame retardant c was increased to 16.7 percent by mass.

In Comparative Example 6, compared to Comparative Example 1, the content of the polyester-based elastomer was decreased to 4.2 percent by mass, the content of the highly polar polyester was decreased to 37.5 percent by mass, the content of the cellulose fibers was decreased to 41.7 percent by mass, and the content of the flame retardant c was increased to 16.6 percent by mass.

In Comparative Example 7, compared to Comparative Example 1, the content of the polyester-based elastomer was increased to 25.0 percent by mass, the content of the highly polar polyester was decreased to 16.7 percent by mass, the content of the cellulose fibers was decreased to 41.7 percent by mass, and the content of the flame retardant c was increased to 16.6 percent by mass.

In Comparative Example 8, compared to Comparative Example 1, the content of the polyester-based elastomer was increased to 20.8 percent by mass, the content of the highly polar polyester was decreased to 20.8 percent by mass, the content of the cellulose fibers was decreased to 41.7 percent by mass, and the content of the flame retardant c was increased to 16.7 percent by mass.

As an index of the impact strength, a Charpy impact strength was used, and a test method therefor was performed in accordance with ISO 179 (JIS K7111). The shape of the test piece was a rectangular plate having a long side length of 80 mm±2 mm, a short side length of 4.0 mm±0.2 mm, and a thickness of 10.0 mm±0.2 mm. As a test machine, an Impact Tester IT (manufactured by Toyo Seiki Seisaku-sho, Ltd.) was used. In a Charpy impact test, a hammer weight, a lifting angle, a width excluding notch depth, and a notch angle were set to 4J (WR2.14N/m), 150°, 8.0 mm±0.2 mm, and 45°, respectively.

As an index of the bending strength, bending characteristics were used, and a test method therefor was performed in accordance with ISO 178 (JIS K7171). The shape of the test piece was a rectangular plate having a long side length of 80 mm±2 mm, a short side length of 10.0 mm±0.2 mm, and a thickness of 4.0 mm±0.2 mm. As a test machine, a 68TM-30 apparatus (manufactured by Instron) was used, and the test was performed with a span distance of 64 mm.

As an index of the flame retardancy, UL94 Standard was used, and the test pieces formed in accordance with UL94 Standard test were used. According to UL94 Standard, 5VA, 5VB, V-0, V-1, V-2, and HB are rated in the order of descending the flame retardancy.

From the test results of the respective Examples thus obtained, the strength and the flame retardancy of the molded product were evaluated in accordance with the following evaluation criteria.
A: Charpy impact strength is 7 kJ/m² or more, bending elastic modulus is 2,000 MPa or more, and flame retardancy rated in accordance with UL 94 standard is V-2 or better.
B: Charpy impact strength is 5 kJ/m² or more, bending elastic modulus is 1,000 MPa or more, and flame retardancy rated in accordance with UL 94 standard is V-2 or better.
C: Charpy impact strength is less than 5 kJ/m², or flame retardancy rated in accordance with UL 94 standard is HB.

As shown in FIG. 1, the evaluation results of Examples are all ranked as B or higher. In particular, in Examples 3, 5, and 6, the evaluation results are all ranked as A. From those results described above, in Examples, it was found that the flame retardancy and the strength of the molded product are improved. On the other hand, as shown in FIG. 2, the evaluation results of Comparative Examples are all ranked as C. From those results described above, in Comparative Examples, it was found that the flame retardancy and the strength of the molded product are difficult to be simultaneously satisfied.

## Claims

1. A molding material containing:
a polyester-based elastomer;
a highly polar polyester comprising poly(lactic acid);
cellulose fibers; and
a flame retardant,
wherein a total content of the polyester-based elastomer and the highly polar polyester is equal to or lower than a content of the cellulose fibers,
the flame retardant has a phosphazene skeleton or a phosphate skeleton in its molecular structure,
a content of the flame retardant with respect to a total content of the polyester-based elastomer, the highly polar polyester, and the cellulose fibers is 1 to 10 percent by mass, and a content of the polyester-based elastomer with respect to a content of the highly polar polyester is 25 to 400 percent by mass.

2. The molding material according to claim 1,
wherein the polyester-based elastomer includes, as raw material monomers, an alkyldicarboxylic acid having an alkylene group with 2 to 8 carbon atoms or a phthalic acid, and an alkylenediol having an alkylene group with 2 to 8 carbon atoms.

3. The molding material according to claim 2,
wherein the polyester-based elastomer includes, besides the raw material monomers, another raw material monomer, and
the another raw material includes at least one selected from the group consisting of styrene, butadiene, acrylic acid, an acrylate ester, methacrylic acid, a methacrylate ester, acetonitrile, isobutylene, isoprene, and ethylene.

4. The molding material according to claim 2,
wherein the highly polar polyester has a repeated structure derived from a raw material monomer, and
in the repeated structure, with respect to two carbon atoms, the number of oxygen atoms is one or more.

5. The molding material according to claim 4,
wherein the highly polar polyester further includes a poly(hydroxybutyric acid).

6. The molding material according to claim 1,
wherein the cellulose fibers has an average fiber length of less than 500 µm, the average fiber length obtained by a method in accordance with ISO 16065-2:2007.

## Patentansprüche

1. Formmasse, beinhaltend:
ein Elastomer auf Polyesterbasis;
einen hoch polaren Polyester, der Poly(Milchsäure) umfasst;
Zellulosefasern; und
ein Flammschutzmittel,
wobei ein Gesamtgehalt des Elastomers auf Polyesterbasis und des hoch polaren Polyesters gleich oder kleiner als ein Gehalt der Zellulosefasern ist,
das Flammschutzmittel ein Phosphazenskelett oder ein Phosphatskelett in seiner Molekularstruktur hat,
ein Gehalt des Flammschutzmittels in Bezug auf einen Gesamtgehalt des Elastomers auf Polyesterbasis, des hoch polaren Polyesters und der Zellulosefasern 1 bis 10 Masseprozent ist und ein Gehalt des Elastomers auf Polyesterbasis in Bezug auf einen Gehalt des hoch polaren Polyesters 25 bis 400 Masseprozent ist.

2. Formmasse nach Anspruch 1,
wobei das Elastomer auf Polyesterbasis als Rohmaterialmonomere eine Alkyldicarbonsäure mit einer Alkylengruppe mit 2 bis 8 Kohlenstoffatomen oder eine Phthalsäure und ein Alkylendiol mit einer Alkylengruppe mit 2 bis 8 Kohlenstoffatomen enthält.

3. Formmasse nach Anspruch 2,
wobei das Elastomer auf Polyesterbasis, neben den Rohmaterialmonomeren, ein weiteres Rohmaterialmonomer enthält und
das weitere Rohmaterial mindestens eines ausgewählt aus der Gruppe bestehend aus Styrol, Butadien, Acrylsäure, einem Acrylatester, Methacrylsäure, einem Methacrylatester, Acetonitril, Isobutylen, Isopren und Ethylen enthält.

4. Formmasse nach Anspruch 2,
wobei der hoch polare Polyester eine wiederholte Struktur aufweist, die von einem Rohmaterialmonomer abgeleitet ist, und
in der wiederholten Struktur, in Bezug auf zwei Kohlenstoffatome, die Anzahl von Sauerstoffatomen eins oder mehr ist.

5. Formmasse nach Anspruch 4,
wobei der hoch polare Polyester weiter eine Poly(Hydroxybuttersäure) enthält.

6. Formmasse nach Anspruch 1,
wobei die Zellulosefasern eine durchschnittliche Faserlänge von weniger als 500 µm haben, wobei die durchschnittliche Faserlänge durch ein Verfahren gemäß ISO 16065-2:2007 erhalten wird.

## Revendications

1. Matière de moulage contenant :
un élastomère à base de polyester ;
un polyester hautement polaire comprenant de l'acide polylactique ;
des fibres de cellulose ; et
un retardateur de flamme,
dans laquelle une teneur totale de l'élastomère à base de polyester et du polyester hautement polaire est égale ou inférieure à une teneur des fibres de cellulose,
le retardateur de flamme possède un squelette phosphazène ou un squelette phosphate dans sa structure moléculaire,
une teneur du retardateur de flamme par rapport à une teneur totale de l'élastomère à base de polyester, du polyester hautement polaire et des fibres de cellulose est de 1 à 10 pour cent en masse, et une teneur de l'élastomère à base de polyester par rapport à une teneur du polyester hautement polaire est de 25 à 400 pour cent en masse.

2. Matière de moulage selon la revendication 1,
dans laquelle l'élastomère à base de polyester inclut, en tant que monomères de matière première, un acide alkyldicarboxylique possédant un groupe alkylène avec 2 à 8 atomes de carbone ou un acide phtalique, et un alkylènediol possédant un groupe alkylène avec 2 à 8 atomes de carbone.

3. Matière de moulage selon la revendication 2,
dans laquelle l'élastomère à base de polyester inclut, en plus des monomères de matière première, un monomère d'une autre matière première, et
l'autre matière première inclut l'un au moins sélectionné parmi le groupe comprenant le styrène, le butadiène, l'acide acrylique, un ester d'acrylate, l'acide méthacrylique, un ester de méthacrylate, l'acétonitrile, l'isobutylène, l'isoprène et l'éthylène.

4. Matière de moulage selon la revendication 2,
dans laquelle le polyester hautement polaire possède une structure répétée dérivée d'un monomètre de matière première, et
dans la structure répétée, par rapport à deux atomes de carbone, le nombre d'atomes d'hydrogène est de un ou plus.

5. Matière de moulage selon la revendication 4,
dans laquelle le polyester hautement polaire inclut en outre un acide polyhydroxybutirique.

6. Matière de moulage selon la revendication 1,
dans laquelle les fibres de cellulose présentent une longueur de fibre moyenne inférieure à 500 µm, la longueur de fibre moyenne étant obtenue selon une méthode conformément à la norme ISO 16065-2:2007.
